# FASCICULE DE BREVET EUROPEEN

(11) **EP 0 644 559 B1**
(45) Date de publication et mention de la délivrance du brevet: **26.11.1997**
(21) Numéro de dépôt: 94810541.6
(22) Date de dépôt: 20.09.1994
(51) Int. Cl.: H01B 13/02

(54) **Accumulateur au sein d'une toronneuse pour le câblage alterne "S-Z"**
Speicher in einer Verseilvorrichtung zum Verseilen mit wechselnder Schlagrichtung
Accumulator within a strander for alternate twisting

(30) Priorité: 22.09.1993 CH 2859/93
(43) Date de publication de la demande: 22.03.1995
(73) Titulaire: CAPNET S.A., CH-1023 Crisser (CH)
(72) Inventeur: Bruggmann, Rémy, CH-1817 Brent (CH); de Boer, Philip, CH-1268 Begnins (CH)
(74) Mandataire: Cronin, Brian Harold John

(56) Documents cités:
- EP-A- 0 529 611

## Description

La présente invention est relative à une toronneuse pour le câblage alterné d'éléments de câblage, tels que des fils, brins ou conducteurs électriques nus, isolés ou assemblés, ou de fibres optiques, en un câble de type "S-Z". L'invention porte plus particulièrement sur l'accumulateur d'une telle toronneuse dans lequel les éléments de câblage reçoivent une forme hélicoïdale alternée avant d'être réunis ensemble au sein d'une filière, puis éventuellement compactés avant, ou à la suite, d'un enrobage en une matière protectrice.

Parmi les accumulateurs connus, une catégorie se distingue par le fait qu'ils comprennent une pluralité de tubes de guidage flexibles à l'intérieur desquels passent les éléments de câblage, ces tubes étant réalisés en un matériau présentant un faible coefficient de frottement avec ces éléments de câblage. Chaque extrémité amont des tubes est fixée dans l'un des orifices d'une pièce stationnaire de répartition, usuellement une plaque à trous, et chaque extrémité aval est fixée dans l'orifice correspondant d'une pièce rotative de torsion, usuellement une tête rotative à trous, reliée à des moyens pour la tourner alternativement dans un sens puis dans l'autre, entraînant ainsi les tubes de guidage en torsion.

Compte tenu de l'apparition, lors du fonctionnement de l'accumulateur, de forces centrifuges proportionnelles au carré de la vitesse de rotation, les tubes doivent être maintenus ensemble sur sensiblement toute leur longueur par des moyens de maintien.

Dans l'accumulateur décrit dans le document US-A- 3 847 190, le paquet de tubes est contenu à l'intérieur d'un tube de grand diamètre qui est solidaire en aval de la pièce rotative. Ainsi, la force centrifuge de chaque élément de câblage est continuellement compensée par son tube respectif, et l'ensemble présente une inertie de rotation faible autorisant des changements de sens de rotation très courts.

Toutefois, le tube de maintien extérieur use, et il apparaît un échauffement entre la face interne de ce tube et le paquet, ce qui constitue un facteur limitatif en vitesse. De plus, le tube de maintien extérieur ne peut pas être trop long afin de ne pas "ballonner" excessivement. Par contre, si ce tube de maintien ne couvre pas totalement le paquet de tubes intérieurs, ceux-ci "ballonnent" à partir d'une certaine vitesse de rotation, ce qui constitue un autre facteur limitatif en vitesse. Enfin, il n'est prévu aucun moyen de guidage adéquat de l'élément de câblage central, élément pourtant important pour le câble final, ce qui résulte en un risque notable de coincement.

Dans le document US-A- 4 974 408, les tubes formant le paquet sont répartis régulièrement autour d'un tube central de plus grand diamètre, et sont maintenus de manière discrète par des bagues ou des anneaux élastiques à intervalles réguliers. Mais alors, du fait du nombre limité de ces anneaux, il est impossible d'assurer un non-ballonnement du paquet de tubes entre chaque paire d'anneaux, et ce plus particulièrement lorsque l'accumulateur passe par le stade où les tubes sont parallèles. De plus, ces ballonnements partiels tendent à déplacer les anneaux longitudinalement, et il convient de prévoir des moyens supplémentaires de maintien des anneaux les uns par rapport aux autres. Enfin, les difficultés de montage d'un tel accumulateur sont importantes, ce qui augmente sensiblement le temps de réalisation et son coût final.

Dans l'accumulateur décrit dans le document EP-A-0 529 611, il est proposé de remédier aux problèmes cités précédemment au moyen d'un matériau qui est réticulé sous une forme cylindrique, formant ainsi une gaine tressée analogue à une chaussette, enfilée puis tendue sur toute la longueur du paquet de tubes entourant un tube central de renfort, cette gaine étant finalement fixée de chaque côté, d'une part à la pièce fixe de répartition, et d'autre part à la pièce rotative de torsion. Toutefois, les propriétés mécaniques finales de cette gaine dépendent dans une très large mesure du matériau plastique ou métallique initial retenu. Si cette gaine est trop rigide, on retrouve un échauffement dû aux frottements avec le paquet de tubes; si elle est trop souple, elle se contente d'accompagner le ballonnement. De plus, on se heurte à des problèmes de mise en place, ainsi qu'à des difficultés d'adaptation pour certaines configurations du fait que cette gaine est un produit peu répandu dans le commerce.

Le but de la présente invention est de proposer un moyen de maintien amélioré d'un paquet de tubes de guidage dans un accumulateur au sein d'une toronneuse, ces moyens étant apte à effectivement retenir ces tubes, même à des vitesses de rotation élevées, sans pour autant augmenter le moment d'inertie de l'ensemble. De préférence, ce moyen de maintien doit pouvoir être réalisé à partir de composants courants pouvant être installés, voir remplacés, de manière aisée, notamment en évitant de démonter le paquet de tubes, et pouvant s'adapter aisément à toute configuration de ce paquet de tubes.

Un autre but de la présente invention est de réaliser un accumulateur à paquet de tubes de guidage amélioré, le paquet présentant un moindre fléchissement latéral, éventuellement même sans tube central de renfort, une meilleure tenue longitudinale, et assurant le passage sans risque de l'élément central de câblage.

Ces buts sont réalisés grâce à un accumulateur du type précité du fait que les moyens de maintien du paquet de tubes comprennent au moins un élément longitudinal flexible de retenue enroulé autour de l'ensemble de tubes sur sensiblement toute leur longueur, et ce de manière hélicoïdale.

Cet élément longitudinal de retenue peut être une simple bande, ou un fil ou un câble. Si désiré, on peut placer plusieurs éléments, soit parallèles enroulés hélicoïdalement dans le même sens, soit croisés enroulés hélicoïdalement dans les deux sens opposés.

Un paquet de tubes étant soit pré-assemblé soit déjà existant, il est alors particulièrement aisé de fixer l'une des extrémités d'un tel élément longitudinal flexible à la pièce fixe ou à la pièce rotative momentanément immobile ou directement sur le paquet de tubes en une zone proche de l'une des deux pièces, puis d'enrouler cet élément en suivant le trajet d'une hélice tout au long du paquet, et ce avec une certaine tension, pour finalement le fixer à l'autre pièce. Le paquet de tubes devient alors compact et présente une géométrie fixe.

Le pas de l'enroulement hélicoïdal de l'élément longitudinal de retenue est au plus égal au pas que prend le tube lors de sa torsion maximale, de préférence entre 3 et 15 fois inférieur.

Le fait de tenir continuellement et hélicoïdalement le paquet de tubes de cette manière, rend le montage compact et insensible aux variations géométriques dues aux forces centrifuges et aux vibrations, et ce quel que soit le nombre de tours maximum finalement appliqué à l'ensemble. En effet, une fois les tubes placés et tenu par le ou les éléments de retenue, il ne peut plus se produire de mouvement de tubes l'un par rapport à l'autre. Vu que les tubes de l'accumulateur sont parfaitement serrés les uns contre les autres, donc que leur position de l'un par rapport à l'autre ne peut plus évoluer, on constate pratiquement aucune usure de ces tubes due à des frottements.

De plus, comme le paquet de tube est continuellement tenu radialement, il n'y a plus de possibilité de ballonnement par la force centrifuge. Le paquet de tube étant compact et géométriquement stable, il tourne alors toujours autour de son centre de gravité qui reste en permanence à la même place, ce qui empêche le phénomène de balourd. L'ensemble de l'accumulateur devient beaucoup plus stable, notamment par l'absence de vibrations ou de fréquences propres induites par un "mal-rond".

De préférence, chaque élément longitudinal de retenue est réalisé en une matière plastique telle que celle commercialisée sous la dénomination EPDM ou Néoprène™, ou en caoutchouc ou autre matière pleine ou tissée présentant une élasticité longitudinale minimum de 2 %.

Un tel élément de retenue sous la forme d'une bande élastique fait alors, de plus, office d'amortisseur. Les vibrations ou les fréquences propres induites par la rotation de l'accumulateur sont fortement amorties. Un autre avantage est que l'on peut enrouler la bande avec une tension prédéterminée pour optimiser à la fois le maintien radial empêchant le ballonnement, et cet effet d'amortissement en tenant compte de la forme du paquet ainsi que des caractéristiques élastiques initiales des tubes.

Utilement, les tubes de guidage présentent des diamètres différents, par exemple trois tubes centraux contigus d'un premier diamètre, et répartis sur les sommets d'un triangle équilatéral, complétés de trois tubes périphériques d'un second diamètre inférieur au premier, et chacun contigu aux premiers tubes pris deux-à-deux.

L'utilisation de tubes de diamètres différents permet d'envisager de nouveaux modes d'empilage, éventuellement en s'affranchissant d'un tube ou autre élément de renfort central, ces nouveaux empilages se révélant encore plus stables que ceux réalisés de manière conventionnelle.

De plus, l'emploi de tubes de diamètre différents permet à l'utilisateur de couvrir une plus large plage d'application. En effet, pour limiter au maximum l'inertie de l'accumulateur, on cherche à maintenir son diamètre en dessous d'un seuil, ce qui, traditionnellement, impliquait également un diamètre maximum pour les tubes composant le paquet. Or la grande majorité du programme de fabrication d'un câblier concerne, en général, des câbles formés de 2 ou 3 conducteurs isolés. Si on dimensionne plus largement une partie des tubes de l'accumulateur (par ex. 3 sur 6), le câblier peut, avec un même accumulateur, aisément produire une large gamme de câbles avant d'être obligé d'acquérir un modèle d'accumulateur plus grand.

Selon un autre aspect inventif, notamment quel que soit le moyen de retenu des tubes du paquet et en l'absence d'un tube central de renfort, l'ensemble des tubes est renforcé par un ou plusieurs filins, tiges ou câbles fixés entre la pièce de répartition et la pièce rotative parallèlement aux tubes, et disposé dans l'espace laissé entre les tubes de guidage. De cette manière, on peut améliorer la tenue mécanique de l'ensemble sans augmenter substantiellement son inertie.

Lorsque l'ensemble de tubes comprend au moins trois tubes contigus disposés régulièrement autour de l'axe central de l'accumulateur, laissant entre eux un espace central non utilisé pour le guidage d'un élément de câblage, on peut alors prévoir, à la sortie de l'accumulateur, entre la pièce rotative de torsion et un organe de compactage de câble, des moyens dirigeant l'un des éléments de câblage de son tube périphérique vers l'axe central de l'organe de compactage de telle sorte que cet élément devienne le noyau du câble. Ces moyens de direction du noyau du câble peuvent comprendre un tube coudé prolongeant l'un des tubes de l'accumulateur, et fixé en amont dans l'un des orifices de la pièce rotative de torsion et en aval au centre d'une plaque intermédiaire de répartition rotative.

L'utilisation, selon l'invention, des bandes élastiques ou autres éléments longitudinaux de retenue procure de nombreux avantages : notamment le choix d'une bande parmi les nombreux éléments équivalents disponibles dans le commerce et le choix de son mode d'enroulement permet d'optimiser facilement toutes les configurations de paquet de tubes envisageables : longue, ou courte, fine ou large, etc... Comme on peut aisément s'en rendre compte, l'utilisation des gaines tressées enfilées autour du paquet de tubes offre beaucoup moins de facilités d'adaptation, donc est moins universelle.

L'invention et ses avantages seront mieux compris à l'étude d'un mode de réalisation pris à titre nullement limitatif et illustré sur les figures annexées, dans lesquelles :
- la figure 1 est une vue schématique de côté d'un accumulateur selon l'invention suivi d'un élément de compactage, formant ensemble une toronneuse;
- la figure 2 est une vue schématique de côté de différents modes d'enroulement d'éléments longitudinaux de retenue autour d'un paquet de tubes de guidage appartenant à la toronneuse selon la figure 1;
- la figure 3 est une vue en coupe d'un accumulateur selon l'invention comportant des tubes de guidage de diamètres différents, et susceptible d'être intégré dans la toronneuse selon la figure 1;
- la figure 4 illustre est une vue en coupe de deux accumulateurs selon l'invention renforcés longitudinalement; et
- la figure 5 est une vue en coupe d'un raccord de l'extrémité d'un tube de guidage dans la pièce stationnaire ou rotative de l'accumulateur appartenant à la toronneuse selon la figure 1.

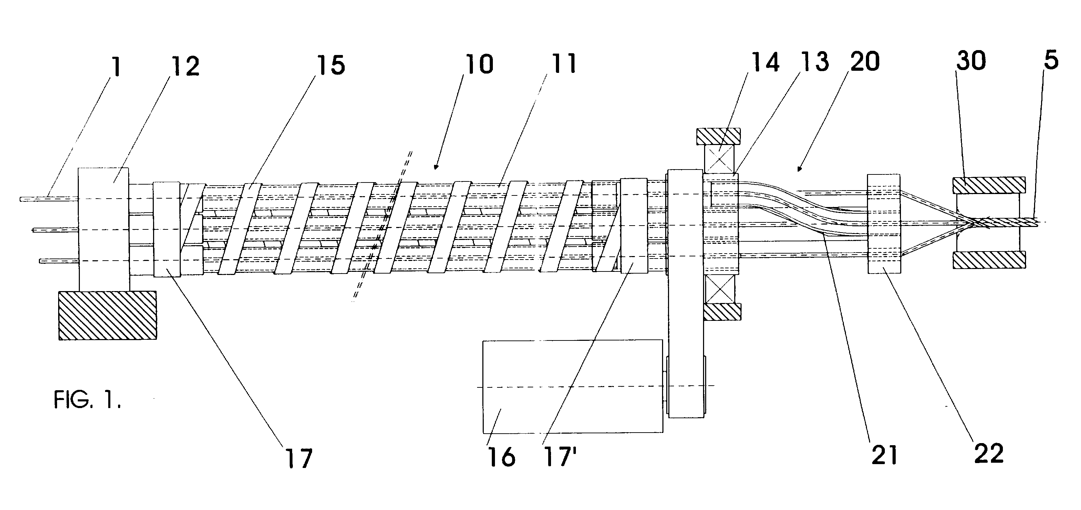

Sur la figure 1 est illustrée une toronneuse comprenant un accumulateur 10 dans lequel on imprime une déformation plastique alternée à des éléments de câbles 1 reçus d'un ou de plusieurs tambours dévidoir amont pour leur donner une forme hélicoïdale alternée, suivi d'une station de compactage 30 dans laquelle les éléments préformés 1 sont réunis et pressés ensemble en un câble 5 sortant de type "S-Z".

Comme illustré, l'accumulateur 10 est constitué d'une pluralité de tubes de guidage 11 parallèles dont chaque extrémité amont, c'est-à-dire sur la gauche de la figure 1, est engagée dans un orifice d'une plaque de répartition stationnaire 12, et dont chaque extrémité aval est engagée dans un orifice correspondant d'une pièce rotative de torsion 13. Le nombre de tubes dans un paquet 9 peut varier, selon les besoins, entre 2-100, en général 2-24 ; et leur longueur est, en général, de l'ordre de 5-30 mètres. Dans chaque tube passent un ou plusieurs éléments de câblage ou brins 1, en général un seul pour des éléments isolés non assemblés, 2-100 pour des éléments assemblés, 1-10 pour des "brins" nus non assemblés et 1-100 pour des brins nus assemblés.

La pièce de torsion 13 est montée dans un palier 14 de manière à pouvoir être tournée autour de son axe central horizontal. Pour ce, cette pièce 13 présente une portée pour une courroie elle même entraînée par la poulie de sortie d'un moteur 16. Ainsi, en appliquant au moyen du moteur 16 une rotation de 1 à 10 tours à la pièce rotative 13, on tord le paquet 9 de tubes 11 dans un premier sens, chaque tube 11 prenant une direction hélicoïdale qui se transmet à chaque brin 1 traversant. On applique immédiatement après une rotation inverse d'un nombre de tours égal au double de ceux appliqués précédement, le paquet 9 de tubes redevenant momentanément parallèle avant de prendre par la suite une nouvelle direction hélicoïdale en sens inverse qui se répercute de manière similaire sur les brins 1. Cette opération se répète à une cadence d'inversion jusqu'à 1000 fois/minute à une vitesse de rotation jusqu'à 1000 tours/minute.

Ces rotations successives engendrent des forces centrifuges sur chaque tube 11 du paquet 9 qui tendent à se dissocier en ballonnant, et ce de manière inégale, ce qui perturberait singulièrement l'arrangement régulier désiré des éléments 1 dans le câble final 5.

Afin d'éviter ce ballonnement, les tubes 11 sont maintenus ensemble, selon l'invention, au moyen d'un ou plusieurs éléments longitudinaux flexibles de retenue 15 enroulés de manière hélicoïdale sur toute la longueur du paquet 9, ces éléments de retenue étant fixés d'une part sur la pièce de répartition stationnaire 12, et d'autre part sur la pièce rotative 13. Ces éléments de retenue 15 peuvent présenter une section transversale ronde ou plate, et sont de préférence constitués par des bandes de section ronde ou plate.

Ces éléments de retenue doivent présenter une certaine flexibilité pour leur permettre d'être enroulés, ce qui est déjà le cas des bandes minces métalliques. Le pas de l'enroulement doit correspondre au nombre de rotations maximum envisagé pour le paquet 9, de telle sorte qu'au moins un tour d'éléments de retenue 15 maintienne chaque pas formé dans le paquet torsadé. En fait, et pour des considérations de maintien efficace des forces centrifuges, on applique à l'élement de retenue un pas de 3-15 fois inférieur, c'est-à-dire que chaque pas du paquet torsadé est entouré entre 3-15 fois par l'élément longitudinal 15.

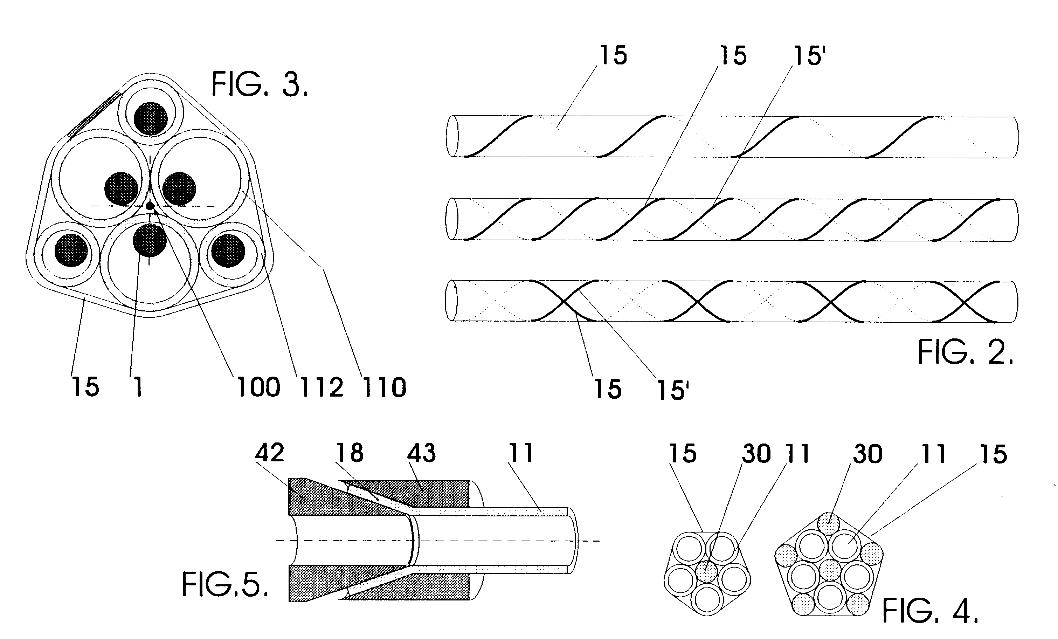

Comme illustré sur la figure 2, on peut envisager, soit un élément unique 15 de retenue présentant à lui seul une solidité suffisante de par sa section, soit une pluralité d'éléments de retenu 15, 15' éventuellement de section plus faible, et enroulés, soit parallèlement dans le même sens, soit de manière croisée dans les deux sens opposés.

De préférence, les éléments de retenue 15 sont réalisé en une matière élastique pleine ou tissée comme du Néoprène™, de l'EPDM ou du caoutchouc naturel. On peut alors, lors de l'enroulement, appliquer simultanément une tension longitudinale pré-déterminée à l'élément de retenue 15, ce qui se traduit par l'adjonction d'une force de serrage radiale orientée vers l'intérieur, appliquée sur l'ensemble du paquet 9, force dont l'intensité a pu être pré-établie en fonction des besoins. Surtout, les éléments de serrage 15 ont alors, en plus, une nouvelle fonction d'amortisseur des vibrations aléatoires engendrées lors des rotations alternées à haute fréquence.

Un autre aspect inventif, illustré sur la figure 3, est l'utilisation de tubes de diamètres différents pour composer le paquet. Par exemple, le paquet peut être composé d'abord de trois tubes centraux 110 parallèles contigus de diamètre externe à partir d'environ 3 millimètres avec un diamètre interne de l'ordre de 2 millimètres jusqu'à un diamètre externe d'environ 22 millimètres avec une diamètre interne de l'ordre de 20 millimètres, répartis sur les sommets d'un triangle équilatéral. Ce paquet est ensuite complété de trois tubes complémentaires 112 de diamètre inférieur au précédent, sensiblement de moitié, chaque tube étant simultanément en contact avec une paire de tubes centraux 110 du fait qu'il est situé au milieu d'un côté du triangle équilatéral. Ce mode d'empilage, régulièrement réparti autour de l'axe central de torsion du paquet, fait que le centre de gravité global du paquet se retrouve également sur cet axe central en évitant tout balourd.

Surtout, ces tubes étant serrés ensemble par les éléments 15 ou autres moyens de maintien périphériques, ils ne peuvent plus bouger les uns par rapport aux autres ce qui, avec l'imbrication due aux différences de diamètres, augmente sensiblement la tenue en fléchissement du paquet en général. On peut alors s'affranchir sans autre du tube de renfort central traditionnel normalement utilisé pour le guidage d'un élément de câblage central. En d'autres termes, on peut consacrer la totalité de la section du paquet, tel que défini par son diamètre correspondant au moment de l'inertie maximume acceptable, pour le passage productif d'éléments de câblage, si désiré d'éléments variés.

Si nécessaire ou souhaité, et comme illustré sur la figure 4, on peut compenser l'absence de tube de renfort traditionnel par un ou plusieurs filins, brins, cordes ou câbles 30 pour soulager la traction s'exerçant sur les tubes 11 lors des torsions imposées par les pièces de répartition et de rotation qui, elles, restent en permanence dans la même position longitudinale. Selon leur disposition, ces cordes apportent un support central ou périphérique au paquet. Ces cordes 30 sont, de préférence, tressées pour ne pas avoir d'influence sur le couple de torsion du paquet de tubes, et peuvent présenter une couche extérieure en polyadipate, comme, par exemple celle commercialisée sous la marque Nylon™, et une âme en fibres aramides, tel que celle commercialisée sous la dénomination Kevlar™.

Si on adopte, pour le paquet 9, un mode d'assemblage dépourvu de tubes de guidage central comme illustré sur la figure 3 et la figure 4, il est alors nécessaire d'amener un des éléments de câblage 1 d'un tube périphérique 11 vers le centre de l'organe de compactage 30 pour l'utiliser comme âme du câble 5 lors de l'assemblage final.

Pour ce, et comme mieux visible sur la figure 1, la pièce rotative de torsion 13 est complétée, en aval, d'une plaque intermédiaire trouée 22 tenue par un cylindre central 23. Cette plaque intermédiaire 22 tournant avec la pièce 13 permet d'effectuer une ultime modification de la répartition des éléments de câblage 1 avant l'organe de compactage 30 du fait que l'un des tubes 11 se prolonge en un coude 21 pénétrant dans le cylindre 23 pour déboucher dans le trou central de la plaque intermédiaire 22.

Par ailleurs, la fixation des extrémités des tubes 11 dans les pièces stationnaires 12 et rotative 13, où se répercute la totalité de la traction subie par ces tubes, doit être faite de manière à ne pas les endommager à ce niveau, notamment en évitant de créer des départs de fissures. Pour ce, chaque extrémité de tube est coincée entre une pièce d'arrêt convexe conique 42 et un manchon 43 dont l'extrémité frontale est concave conique en correspondance.

De plus, les contraintes en torsions et en cisaillement dues aux mouvements rotatifs alternés des tubes 11 provoquent une usure rapide au niveau des points d'ancrage de leurs extrémités, notamment du côté de la pièce rotative. Pour répartir, en ces points d'ancrage, ces contraintes de torsion et de cisaillement, on renforce les tubes 11 en augmentant sur une certaine distance, par exemple entre 50 et 300 mm, le diamètre extérieur. Ceci peut être réalisé en fixant, par collage ou autre moyen adéquat, un tube de plus grand diamètre sur l'extrémité du tube initial.

De nombreuses améliorations peuvent être apportées à cet accumulateur de toronneuse dans le cadre de cette invention.

Comme il ressort de la lecture de ce qui précède, l'utilisation des éléments longitudinaux de retenue enroulés autour du paquet de tubes de manière hélicoïdale procure de nombreux avantages. Toutefois, il est bien entendu que les nouveaux modes d'empilage de tubes selon les figures 3 et 4, sans tube central de renfort, ainsi que l'utilisation de câbles de renfort, ainsi que le dispositif de recentrage d'un élément de câblage procurent d'autres avantages appréciables, même si l'on emploie d'autres moyens de maintien pour le paquet de tubes.

Bien entendu, il est possible d'employer un tube central de guidage, si désiré, dans un paquet de tubes selon l'invention.

## Revendications

1. Accumulateur (10) d'une toronneuse pour le câblage alterné d'au moins un élément (1) de câblage, tels que des fils, brins ou conducteurs, des faisceaux de fils ou câbles torsadés ou non, des fibres optiques, en un câble (5) de type "S-Z", cet accumulateur étant constitué d'une pluralité de tubes de guidage flexibles (11) à l'intérieur desquels passent les éléments de câblage, tubes dont chaque extrémité amont est fixée dans l'un des orifices d'une pièce stationnaire de répartition (12) et dont chaque extrémité aval est fixée dans l'orifice correspondant d'une pièce rotative de torsion (13) reliée à des moyens (16) pour le tourner alternativement dans un sens de rotation puis dans l'autre, entraînant ainsi les tubes de guidage (11) en torsion, ces tubes étant tenus ensemble sur sensiblement toute leur longueur par des moyens de maintien, caractérisé en ce que les moyens de maintien comprennent au moins un élément longitudinal flexible (15) de retenue enroulé autour de l'ensemble de tubes sur sensiblement toute leur longueur, et ce de manière hélicoïdale.

2. Accumulateur selon la revendication 1, caractérisé en ce que le pas de l'enroulement hélicoïdal de l'élément longitudinal de retenue est au plus égal au pas que prend le tube lors de sa torsion maximale, de préférence entre 3 et 15 fois inférieur.

3. Accumulateur selon la revendication 1 ou 2, caractérisé en ce que l'élément longitudinal (15) de retenue est une bande.

4. Accumulateur selon la revendication 1 ou 2, caractérisé en ce que l'élément longitudinal (15) de retenue est un fil ou un câble.

5. Accumulateur selon l'une des revendications précédentes, caractérisé en ce que les moyens de maintien comprennent une pluralité d'éléments longitudinaux de retenue (15) parallèles enroulés hélicoïdalement dans le même sens.

6. Accumulateur selon l'une des revendications 1 à 4, caractérisé en ce que les moyens de maintien comprennent une pluralité d'éléments longitudinaux de retenue (15) croisés, enroulés hélicoïdalement dans les deux sens opposés.

7. Accumulateur selon l'une des revendications précédentes, caractérisé en ce que chaque élément longitudinal de retenue est réalisé en une matière pleine ou tissée présentant une élasticité longitudinale minimume de 2 %.

8. Accumulateur selon l'une des revendications précédentes, caractérisé en ce que les tubes de guidage (11) présentent des diamètres différents, par exemple trois tubes centraux contigus d'un premier diamètre, et répartis sur les sommets d'un triangle équilatéral, complétés de trois tubes périphériques d'un second diamètre inférieur au premier, et chacun contigu aux premiers tubes pris deux-à-deux.

9. Accumulateur selon l'une des revendications précédentes, caractérisé en ce que l'ensemble des tubes est renforcé par un ou plusieurs câbles fixés entre la pièce de répartition (12) et la pièce rotative (13) parallèlement aux tubes, et disposé dans l'espace laissé entre les tubes de guidage (11).

10. Accumulateur selon l'une des revendications précédentes suivi d'un organe (30) de compactage de câble, caractérisé en ce que l'ensemble de tubes comprend au moins trois tubes contigus disposés régulièrement autour de l'axe central de l'accumulateur, laissant entre eux un espace central non utilisé pour le guidage d'un élément de câblage, et en ce qu'il comprend, entre la pièce rotative de torsion (13) et l'organe de compactage (30), des moyens (20) dirigeant l'un des éléments (1) de câblage sur l'axe central de l'organe de compactage (30) de telle sorte que cet élément devienne le noyau du câble (5).

11. Accumulateur selon la revendication 10, caractérisé en ce que les moyens (20) de direction du noyau du câble comprennent un tube (21) coudé prolongeant l'un des tubes (11) de l'accumulateur (10), et fixé en amont dans l'un des orifices de la pièce rotative de torsion (13) et en aval au centre d'une plaque intermédiaire (22) de répartition rotative.

## Patentansprüche

1. Speicher (10) einer Verseilvorrichtung zum Verseilen zumindest eines Verseilelements (1) wie Drähte, Litzen oder Leiter, verdrillte oder nicht verdrillte Draht- oder Kabelbündel oder Lichtwellenleiter zu einem Kabel (5) mit wechselnder Schlagrichtung, wobei dieser Speicher aus einer Mehrzahl von: biegsamen Führungsrohren (11) besteht, durch die die Verseilelemente hindurchlaufen und deren zugangsseitige Enden alle in je einem der Löcher eines ortsfesten Verteilstücks (12) befestigt sind, während ihre abgangsseitigen Enden in je einem entsprechenden Loch eines drehbaren Verdrillstücks (13) befestigt sind, das mit Organen (16) verbunden ist, um abwechselnd in einer, dann in der anderen Richtung rotiert zu werden und so die Führungsrohre (11) selbst zu verdrillen, wobei diese Rohre über im wesentlichen ihre gesamte Länge durch Halteorgane zusammengehalten werden, dadurch gekennzeichnet, dass die Halteorgane zumindest ein biegsames längslaufendes Rückhalteelement (15) enthalten, das über im wesentlichen die gesamte Länge des Rohrsatzes um diesen wendelförmig aufgewickelt ist.

2. Speicher gemäss Anspruch 1, dadurch gekennzeichnet, dass der Schritt der wendelförmigen Aufwicklung des längslaufenden Rückhalteelements höchstens gleich dem Wicklungsschritt ist, den das Rohr bei seiner maximalen Verdrillung annimmt, vorzugsweise aber zwischen drei- und fünfzehnmal kleiner.

3. Speicher gemäss Anspruch 1 oder 2, dadurch gekennzeichnet, dass das längslaufende Rückhalteelement (15) ein Band ist.

4. Speicher gemäss Anspruch 1 oder 2, dadurch gekennzeichnet, dass das längslaufende Rückhalteelement (15) ein Draht oder ein Kabel ist.

5. Speicher gemäss einem der vorangehenden Ansprüche, dadurch gekennzeichnet, dass die Halteorgane eine Mehrzahl von. parallelen, längslaufenden Rückhalteelementen (15) enthalten, die im gleichen Sinne wendelförmig aufgewickelt sind.

6. Speicher gemäss einem der Ansprüche 1 bis 4, dadurch gekennzeichnet, dass die Halteorgane eine Mehrzahl von sich überkreuzenden, längslaufenden Rückhalteelementen (15) enthalten, die in entgegengesetzten Richtungen wendelförmig aufgewickelt sind.

7. Speicher gemäss einem der vorangehenden Ansprüche, dadurch gekennzeichnet, dass jedes längslaufende Rückhalteelement aus einem vollen oder gewebten Material gefertigt ist, das eine Längselastizität von mindestens 2 % hat.

8. Speicher gemäss einem der vorangehenden Ansprüche, dadurch gekennzeichnet, dass die Führungsrohre (11) unterschiedliche Durchmesser aufweisen, zum Beispiel drei aneinander anliegende mittlere Rohre eines ersten Durchmessers, die sich auf die Ecken eines gleichseitigen Dreiecks verteilen und durch drei äussere Rohre eines zweiten Durchmessers ergänzt werden, der kleiner als der erste Durchmesser ist, wobei jedes dieser äusseren Rohre an jeweils zwei der ersten Rohre anliegt.

9. Speicher gemäss einem der vorangehenden Ansprüche, dadurch gekennzeichnet, dass der Rohrsatz durch ein oder mehrere Kabel verstärkt ist, die zwischen dem Verteilstück (12) und dem drehbaren Teil (13) parallel zu den Rohren befestigt und in dem zwischen den Führungsrohren (11) verbleibenden Raum angeordnet sind.

10. Speicher gemäss einem der vorangehenden Ansprüche, auf den ein Kabelverdichtungsorgan (30) folgt, dadurch gekennzeichnet, dass der Rohrsatz zumindest drei aneinander anliegende Rohre enthält, die regelmässig um die Mittelachse des Speichers herum angeordnet sind und zwischen sich einen Raum in der Mitte freilassen, der nicht für die Führung eines Verseilelements verwendet wird, und dass er zwischen dem drehbaren Verdrillstück (13) und dem Verdichtungsorgan (30) Organe (20) aufweist, die eines der Verseilelemente (1) so zur Mittelachse des Verdichtungsorgans (30) leiten, dass dieses Element zum Kern des Kabels (5) wird.

11. Speicher gemäss Anspruch 10, dadurch gekennzeichnet, dass die Organe (20) für die Führung des Kabelkerns ein Schenkelrohr (21) aufweisen, das die Verlängerung eines der Rohre (11) des Speichers (10) darstellt und zugangsseitig in einem der Löcher des drehbaren Verdrillstücks (13), abgangsseitig dagegen in der Mitte einer drehbaren Zwischenverteilplatte (22) befestigt ist.

## Claims

1. Accumulator (10) of a strander for the alternate twisting of at least one cabling element (1), such as wires, strands or conductors, woven or non-woven bundles of wires or cables, or optical fibers, into an alternately wound ("S-Z") cable (5), this accumulator being made up of a plurality of flexible guide tubes (11) inside which the cabling elements pass, these tubes having an upstream end fixed in one of the orifices of a stationary distribution element (12) and a downstream end fixed in a corresponding orifice of a rotary twisting element (13) connected to means (16) for rotating it alternately in one direction of rotation then the other, hence imparting to the guide tubes (11) a tortional movement, these tubes being held along substantially their entire length by support means, characterized in that the support means comprise as least one flexible longitudinal retaining element (15) wound about the assembly of tubes over substantially their entire length in helicoidal fashion.

2. Accumulator according to claim 1, characterized in that the pitch of the helicoidal winding of the longitudinal retaining element is at most equal to the pitch of the tube when it is subjected to maximum winding, preferably between 3 and 15 times less.

3. Accumulator according to claim 1 or 2, characterized in that the longitudinal retaining element (15) is a band.

4. Accumulator according to claim 1 or 2, characterized in that the longitudinal retaining element (15) is a wire or cable.

5. Accumulator according to any preceding claim, characterized in that the holding means comprise a plurality of parallel longitudinal retaining elements (15) helicoidally wound in the same direction.

6. Accumulator according to any of claims 1 to 4, characterized in that the support means comprise a plurality of parallel longitudinal retaining elements (15) helicoidally wound in two opposite directions.

7. Accumulator according to any preceding claim, characterized in that each longitudinal retaining element is made of continuous (i.e. full) or woven material having a minimum longitudinal elasticity of 2%.

8. Accumulator according to any preceding claim, characterized in that the guide tubes (11) have different diameters, for example three continuous central tubes having a first diameter and distributed at the corners of an equilateral triangle, with three complementary peripheral tubes of a second diameter and each contiguous to the first tubes taken two-by-two.

9. Accumulator according to any preceding claim, characterized in that the assembly of tubes is reinforced by one or more cables fixed between the distribution element (12) and the rotary element (13) parallel to its tubes, and arranged in the space between the guide tubes (11).

10. Accumulator according to any preceding claim, followed by a cable-compacting member (30), characterized in that : the assembly of tubes comprises at least three contiguous tubes arranged regularly around the central axis of the accumulator, leaving therebetween a central space that is not used for guiding a cabling element; and in that it comprises, between the rotary twisting element (13) and the compacting means (30), means guiding one of the cabling elements (1) onto the central axis of the compacting member (30) such that said element becomes the core of the cable (5).

11. Accumulator according to claim 10, characterized in that the means (20) for guiding the cable core comprise an elbow-shaped tube (21) in extension of one of the tubes (11) of the accumulator (10) and which is fixed upstream of one of the orifices of the rotary twisting element (13) and downstream of the center of an intermediate rotary distribution plate (22).
